# EUROPÄISCHE PATENTSCHRIFT

(11) **EP 1 524 244 B1**
(45) Veröffentlichungstag und Bekanntmachung des Hinweises auf die Patenterteilung: **20.08.2008**
(21) Anmeldenummer: 04105025.3
(22) Anmeldetag: 13.10.2004
(51) Int. Cl.: C03B 5/225, C03B 7/07, C03B 5/43

(54) **Vorrichtung zum Läutern einer Glasschmelze oder Glaskeramik**
Apparatus for refining glass or glass-ceramic
Dispositif d'affinage d'un verre ou d'une vitro-céramique

(30) Priorität: 13.10.2003 DE 10348072
(43) Veröffentlichungstag der Anmeldung: 20.04.2005
(73) Patentinhaber: Schott AG, 55122 Mainz (DE)
(72) Erfinder: Wegener, Holger, 31061, Brunkensen (DE); Schollmayer, Jörg, 55128 Mainz (DE); Hunnius, Holger, 55122 Mainz (DE); Witte, Jörg, 64319, Pfungstadt (DE); Winkelmann, Anton, 55270, Ober-Olm (DE); Weidmann, Günter, 55237, Flonheim (DE)
(74) Vertreter: 2K Patentanwälte Kewitz & Kollegen

(56) Entgegenhaltungen:
- WO-A-99/41206
- DE-A1- 3 113 505
- DE-B- 1 019 443
- GB-A- 1 514 317
- US-A- 2 686 820
- PATENT ABSTRACTS OF JAPAN Bd. 017, Nr. 102 (C-1031), 2. März 1993 (1993-03-02) & JP 04 292424 A (NIPPON SHEET GLASS CO LTD), 16. Oktober 1992 (1992-10-16)
- PATENT ABSTRACTS OF JAPAN Bd. 2000, Nr. 08, 6. Oktober 2000 (2000-10-06) & JP 2000 128548 A (ASAHI TECHNO GLASS CORP), 9. Mai 2000 (2000-05-09)

## Beschreibung

Die vorliegende Erfindung betrifft eine Vorrichtung zum Läutern einer Glasschmelze oder Glaskeramik, insbesondere zum Läutern hochschmelzender optischer Gläser.

Ständig steigende Qualitätsanforderungen und immer strengere Qualitätsauflagen zwingen Glashersteller zur Herstellung von immer homogeneren Gläsern oder Glaskeramiken. Dies stellt immer höhere Anforderungen auch an den im Rahmen der Glasherstellung auszuführenden Schritt eines Läuterns der Glasschmelze oder Glaskeramik, um in der Glasschmelze oder Glaskeramik verbliebene Blasen zu beseitigen. Zu diesem Zweck ist es üblich, die Glasschmelze oder Glaskeramik in einer Läuterkammer oder in einer Läuterwanne zu läutern.

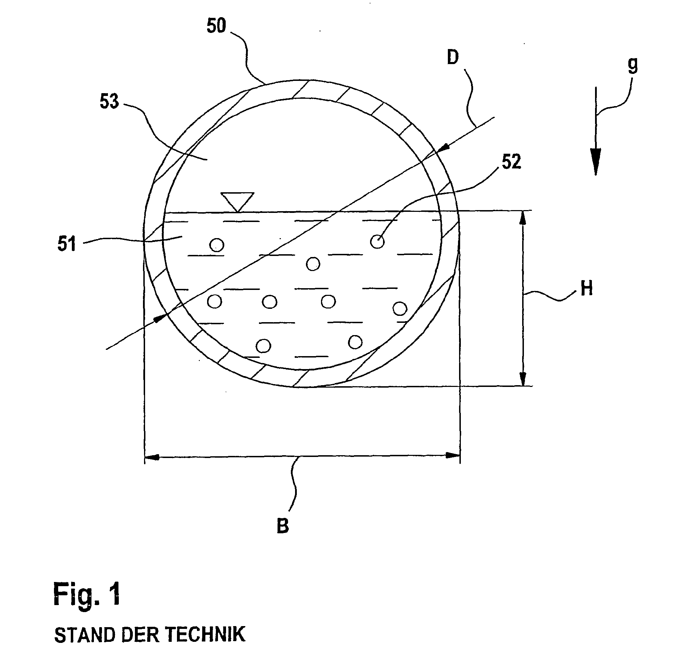

Die Fig. 1 zeigt einen Querschnitt durch eine Läuterkammer gemäß dem Stand der Technik. Die Läuterkammer ist aus einem zylindrischen Rohr 50 gebildet, in welcher die Glasschmelze 51 zum Läutern aufgenommen ist. Das zylindrische Rohr 50 ist bis zu einer Höhe H mit der Glasschmelze oder Glaskeramik 51 angefüllt, über dem Niveau H befindet sich ein Gasvolumen 53. Wie in der Fig. 1 gezeigt, steigen in der Glasschmelze 51 Gasbläschen 52 entgegen der Schwerkraft g zu der Grenzfläche zwischen der Glasschmelze 51 und dem Gasvolumen 53 auf, um an der Grenzfläche in das Gasvolumen 53 auszutreten. Das zylindrische Rohr 50 ist im Wesentlichen horizontal angeordnet, das heißt, im Wesentlichen senkrecht zur Richtung der Schwerkraft g.

Gemäß dem Stand der Technik sind Läuterkammem üblicher Weise aus zylindrischen Rohren hergestellt, weil die Läuterkammer so einfach herzustellen ist, insbesondere unter Verwendung von Standardwerkzeugen. Zylindrische Rohre gemäß der Fig. 1 sind auch als Standardprofile aus geeigneten Metallen, insbesondere Edelmetallen, erhältlich und können so einfach weiter verarbeitet werden. Ferner führt die vergleichsweise einfache Geometrie von zylindrischen Rohrkörpern zu einfachen Strömungs- und Mischverhältnissen, die vergleichsweise einfach mathematisch berechnet oder simuliert werden können. So können die Bedingungen zum Läutern noch geeigneter gewählt werden, sodass noch homogenere Gläser oder Glaskeramiken hergestellt werden können.

Für eine wirtschaftliche Produktion ist jedoch zusätzlich auf einen möglichst hohen Massendurchsatz der Läuterkammer zu achten. Dies bedingt Kompromisse. Für eine optimale Läuterung der Glasschmelze 51 gemäß der Fig. 1 sollte die Grenzfläche zwischen Glasschmelze 51 und Gasvolumen 53 möglichst groß sein. In der Praxis limitiert dies den Glasstand H auf den halben Durchmesser des zylindrischen Rohrs 50. Mit anderen Worten, wenn H den maximalen Glasstand in dem zylindrischen Rohr 50 bezeichnet und B eine maximale Breite des zylindrischen Rohrs 50, so gilt gemäß dem Stand der Technik: H/B ≈ 0,5.

Zur Erhöhung des Massendurchsatzes sind auch Läuterwannen mit einem nicht-kreisförmigen Profil vorgeschlagen worden. Solche Läuterwannen sind für ein großes Fassungsvermögen in vertikaler Richtung, das heißt im Wesentlichen parallel zu der Richtung der Schwerkraft g, vertieft, beispielsweise mit einem elliptischen Profil versehen. Gasbläschen müssen deshalb eine vergleichsweise lange Wegstrecke bis zu der Grenzfläche zwischen Glasschmelze und Gasvolumen zurücklegen. Ferner ist die Größe der Grenzfläche relativ klein, was die Effizienz des Läuterprozesses mindert, eine hohe Verweilzeit der Glasschmelze in der Läuterwanne bedingt und somit den Massendurchsatz verringert. Ferner sind rinnenförmige Läuterwannen gemäß der vorstehenden Beschreibung nach oben hin offen, was zu thermischen Problemen führt, insbesondere eine exakte und homogene Temperaturregelung der Glasschmelze schwierig macht. Ferner können Verunreinigungen ungehindert in die Läuterwanne hineinfallen.

DE-AS 1 019 443 offenbart ein Verfahren und eine Vorrichtung zum Läutern von Glasschmelzen, wobei hohe Temperaturunterschiede innerhalb des Schmelzbades, die starke Konnvexionsströme hervorrufen würden, vermieden werden sollen. Zu diesem Zweck weist die Läuterwanne ein rechteckförmiges Profil auf und sind rechteckförmige Elektroden in unmittelbarer Nähe zu den Wandungen angeordnet, um so die an den Wandungen erfolgende Abstrahlung und Wärmeleitung zu kompensieren. Eine Innenauskleidung der Wandungen der Läuterkammer mit einem Metall ist nicht offenbart.

DE 699 02 848 T2 offenbart eine Vakuumentgasungsvorrichtung für geschmolzenes Glas, bei der in einem zentralen Bereich, der unter einem Unterdruck steht, aus der Glasschmelze austretende Blasen in einem Vakuumbehälter abgesaugt werden. Die Schmelzenkammer in dem Vakuumbehälter hat ein rechteckförmiges Profil.

PAJ-Abstract zu JP 2000128548 A offenbart eine Läuterwanne, deren Innenwandungen mit einem Edelmetall überzogen ist, wobei das Verhältnis Höhe/Breite der Läuterwanne kleiner als 1 ist.

DE 42 34 939 A1 offenbart einen Kanal zum Transport von Glasschmelzen unter gleichzeitiger Kühlung. Eine Verminderung der Temperaturdifferenz über die Glasstromdicke soll durch eine Verringerung der Glasstromdicke erreicht werden. Zu diesem Zweck ist der Schmelzenkanal rechteckförmig ausgebildet, wobei die Höhe sehr viel kleiner ist als die Breite des Kanals. Diese Druckschrift betrifft keine Vorrichtung zum Läutern einer Glasschmelze.

DE 102 53 222 A1 offenbart eine Vorrichtung zum Läutern von schmelzflüssigem Glas, bei der der Querschnitt des Entgasungsbereiches bzw. der Läuterkammer kreisförmig ist.

US-A-2686820 offenbart eine Vorrichtung zum Läutern einer Glasschmelze gemäß dem Oberbegriff von Anspruch 1. Die Vorrichtung umfasst ein Oberteil und ein Unterteil aus einem Feuerfestmaterial und weist ein rechtwinkliges Profil auf, das in horizontaler Richtung verbreitert ist. In dem Unterteil ist eine Rinne ausgebildet, das Oberteil ist zum Abdecken der Rinne ausgelegt. Die Innenoberfläche des Unterteils ist mit einer Innenverkleidung aus Graphit ausgekleidet, die dazu dient zu verhindern, dass die heiße Glasschmelze mit dem Feuerfestmaterial in Kontakt gelangt, was sonst zu Verunreinigungen führen würde. Eine getrennte Beheizbarkeit des Oberteils ist nicht offenbart. Die Glasschmelze wird durch Platten aus Kohlenstoff oder Metall beheizt, die in die Glasschmelze eingetaucht sind.

WO-A-99/41206 offenbart eine Vorrichtung zur Vergleichmäßigung der Temperatur einer Glasschmelze. Die Vorrichtung umfasst ein Unterteil, in der eine die Schmelze aufnehmende Rinne ausgebildet ist, sowie ein Oberteil zum Abdecken des Unterteils mit der Rinne. Auf einer Außenseite des Oberteils sind Heizelemente angeordnet, um das Oberteil separat zu dem Unterteil zu beheizen und so die Temperatur der Glasschmelze zu vergleichmäßigen.

Aufgabe der vorliegenden Erfindung ist es, eine Vorrichtung zum Läutern einer Glasschmelze bereitzustellen, mit der die Temperaturverhältnisse zur Läuterung zuverlässig und variabel vorgegeben werden können und ein effizienter und zuverlässiger Läuterprozess bei gleichzeitig hohem Massendurchsatz der Vorrichtung realisiert werden kann.

Diese Aufgabe wird gelöst durch eine Vorrichtung zum Läutern mit den Merkmalen nach Anspruch 1. Vorteilhafte Weiterbildungen sind Gegenstand der rückbezogenen Unteransprüche.

Die vorliegende Erfindung beruht somit auf einer Abkehr von dem herkömmlichen Prinzip, die Läuterkammer mit einem kreisförmigen oder in Richtung der Schwerkraft vertieften, aber relativ schmalen Profil auszubilden. Erfindungsgemäß ist das Profil vielmehr quer zur Richtung der Schwerkraft verbreitert und in Richtung der Schwerkraft relativ flach. Somit steht eine vergleichsweise große Grenzfläche zwischen der Glasschmelze oder Glaskeramik und dem darüber befindlichem Gasvolumen für den Übertritt der Gasbläschen aus der Glasschmelze in das Gasvolumen zur Verfügung. Vorteilhaft ist auch, dass die Gasbläschen nur eine relativ kurze Wegstrecke zurückzulegen brauchen, um in das Gasvolumen überzutreten. Ferner lässt sich der Massendurchsatz in überraschend einfacher Weise durch Vorgabe einer maximalen Breite der Läuterkammer und entsprechende Anpassung einer maximalen bestimmungsgemäßen Glasstandshöhe in der Läuterkammer vorgeben. Insgesamt lässt sich so die Läuterkammer in einfacher Weise in Anpassung an den zu erzielenden Massendurchsatz skalieren.

Unter dem Begriff rohrförmiges Gebilde oder Rohr, wie er nachfolgend verwendet wird, sei ein Hohlkörper mit einem nicht-kreisförmigem Profil verstanden, der zur vorübergehenden Aufnahme der Glasschmelze oder Glaskeramik und/oder zum Leiten der Glasschmelze von einem Rohreinlass, der beispielsweise mit einer Schmelzwanne in Verbindung steht, hin zu einem Rohrauslass, der beispielsweise mit einer nachgeordneten Glasformgebungsstufe in Verbindung steht, ausgelegt ist. In Umfangsrichtung kann das rohrförmige Gebilde grundsätzlich auch zwei- oder mehrstückig ausgebildet sein.

Dabei ist das beheizbare rohrförmige Gebilde entlang einem Umfang von einem Feuerfestmaterial, insbesondere einer feuerfesten Keramik, umgeben. Das Feuerfestmaterial ist bevorzugt als ein- oder mehrstückiger Körper ausgebildet und dient einem Oxidationsschutz und einer ausreichenden thermischen Isolierung der zu läuternden Glasschmelze oder Glaskeramik. Bevorzugt weist der Körper aus dem Feuerfestmaterial eine ausreichende thermische Masse auf, sodass die Temperatur der zu läuternden Glasschmelze innerhalb vorgebbarer Grenzen stabil geregelt werden kann, um für eine noch homogenere Läuterung zu sorgen.

Weil das rohrförmige Gebilde die zu läuternde Glasschmelze in dem rohrförmigen Gebilde nach oben hin abgedeckt ist, können nicht versehentlich Verunreinigungen oder dergleichen in die zu läuternde Glasschmelze gelangen.

Erfindungsgemäß ist eine Innenoberfläche des rohrförmigen Gebildes zumindest an den Bereichen, die während des Läuterns unmittelbar mit der Glasschmelze in Berührung gelangen, aus einem Metall gebildet, das bevorzugt inert oder zumindest relativ träge mit der Glasschmelze reagiert, sodass sich auch optische Gläser mit relativ niedrigem Extinktionskoeffizienten realisieren lassen.

Als nicht-kreisförmige Profile kommen erfindungsgemäß sämtliche unrunden Profile in Betracht. Dabei können auch stetige unrunde Profile Verwendung finden, beispielsweise elliptische, hyperbolische oder an Randbereichen abgerundete Profile mit Verbreiterung quer zur Strömungsrichtung und Schwerkraft in der bestimmungsgemäßen horizontalen Lage des rohrförmigen Gebildes. Gemäß einer bevorzugten Ausführungsform ist das Profil des rohrförmigen Gebildes im Wesentlichen rechteckförmig, weil rechteckförmige Profile in besonders vorteilhaft einfacher Weise realisiert werden können und sich Strömungs- und Mischverhältnisse in rechteckförmigen Wannenkörpern vergleichsweise einfach berechnen oder simulieren lassen.

Bevorzugt sind Eckbereiche des rechteckförmigen Profils des rohrförmigen Gebildes abgeschrägt, sodass das Profil insgesamt einem Trapez oder Polygon entsprechen kann. Die Eckbereiche des rechteckförmigen Profils des rohrförmigen Gebildes können auch abgerundet sein, weil sich so thermische Verspannungen in dem rohrförmigen Gebilde noch weiter vermindern lassen und sich noch homogenere Strömungs- und Mischverhältnisse erzielen lassen.

Bevorzugt ist das nicht-kreisförmige Profil des rohrförmigen Gebildes so gewählt, dass ein Verhältnis einer maximalen Höhe des rohrförmigen Gebildes zu einer maximalen Breite des rohrförmigen Gebildes kleiner als etwa 0,5, bevorzugt deutlich kleiner als 0,5, ist.

Dabei ist das rohrförmige Gebilde von einem Unterteil und einem Oberteil aus dem Feuerfestmaterial gebildet, wobei in dem Unterteil eine Rinne zum Aufnehmen der Glasschmelze oder Glaskeramik ausgebildet ist. Insgesamt lässt sich so eine Zweiteilung der Läutervorrichtung realisieren: während das Profil des rohrförmigen Gebildes durch geeignete Formgebung der Rinne in dem Unterteil, wie vorstehend beschrieben, vorgegeben werden kann, dient das Oberteil zum Abdecken der Rinne und zum Vorgeben geeigneter thermischer Randbedingungen der Rinne bei der Läuterung. Vorteilhaft ist, dass ein hoher Bearbeitungsaufwand nur in die geeignete Ausbildung des Unterteils investiert werden muss, während das Oberteil auch aus Standardelementen, beispielsweise aus Platten aus einem feuerfesten Material, insbesondere Keramikplatten, gebildet werden kann.

Bevorzugt weist das Unterteil einen oberen Rand zum Abstützen des Oberteils auf. Der Rand ist bevorzugt flach ausgebildet und spannt eine Ebene auf, sodass ein als plattenförmiger Körper ausgebildetes Oberteil zum Abdecken der Rinne auf das Unterteil aufgelegt werden kann.

Durch den vorgenannten zweiteiligen Aufbau lässt sich insbesondere auch eine Oberhitze bei der Läuterung realisieren. Das Oberteil strahlt somit Wärme auf die Oberfläche der Glaskeramik ab, sodass die Glasschmelze auch indirekt beheizt werden kann. Dies hat den Vorteil, dass bei Gläsern mit stark zur Verdampfung neigenden Bestandteilen (beispielsweise B₂O₃, P₂O₅) keine starken und turbulenten Störungen unmittelbar unter dem Flüssigkeitsspiegel der Glasschmelze auftreten. Diese würden sonst leicht flüchtige Komponenten mit sich fortreißen, was zu einer Veränderung der Glaszusammensetzung führen könnte. Auch wird hierdurch ein Verstopfen von Filteranlagen der Läutervorrichtung vermieden. Die Oberhitze hat insbesondere auch den Vorteil, dass sich relativ hohe Oberflächentemperaturen der Glasschmelze realisieren lassen, sodass ein Aufplatzen von Gasblasen im Bereich der Oberfläche sichergestellt werden kann.

Erfindungsgemäß sind das Unterteil und das Oberteil getrennt elektrisch beheizbar, sodass die Temperaturverhältnisse zur Läuterung noch variabler vorgegeben werden können. Zur elektrischen Isolation zwischen dem Unterteil und dem Oberteil kann ein Abstandstück aus einem isolierenden Material zwischen dem Unterteil und dem Oberteil vorgesehen sein, beispielsweise auf dem oberen Rand des Unterteils. Das Abstandstück kann auch flüssigkeitsgekühlt sein, um die zu läuternde Glasschmelze noch besser von der Umgebungsatmosphäre zu trennen. Insbesondere lassen sich so auch reduzierende Umgebungsbedingungen in dem rohrförmigen Gebilde bzw. in der Rinne der Läutervorrichtung realisieren.

Ganz besonders bevorzugt sind die Innenoberflächen des Unterteils und des Oberteils vollständig aus dem inerten oder reaktionsträgen Metall gebildet. So kann eine Korrosion des umgebenden Feuerfestmaterials verhindert und ein Langzeitbetrieb der Läutervorrichtung realisiert werden.

Zu diesem Zweck können die Inneroberflächen des Unterteils und/oder des Oberteils vollständig mit einem Metallblech ausgekleidet sein. Das Metallblech kann im Voraus mittels geeigneter Umformungswerkzeuge in einfacher Weise zu einem rohrförmigen oder rinnenförmigen Körper mit einem geeigneten Profil umgeformt werden. Dieser rohrförmige oder rinnenförmige Metallblechkörper kann dann in eine geeignete, korrespondierend zu dem Profil ausgebildete Aufnahme in dem Unterteil eingesetzt oder eingelegt werden. Das dem Oberteil zugeordnete Metallblech ist bevorzugt eben und kann aus einem Standard-Metallblech geeignet zugeschnitten werden. Die Metallbleche können einstückig oder mehrstückig ausgebildet sein. Mehrstückig ausgebildete Metallbleche können miteinander verschweißt oder Stoß-an-Stoß aneinander anliegen. Die Metallbleche können mit dem Unterteil und/oder dem Oberteil verbunden sein, beispielsweise mittels Halteklammern, Schraubverbindungen oder kraftschlüssigen Verbindungstechniken.

Alternativ kann das Metall auf die Innenoberfläche des Unterteils und/oder des Oberteils aufgespritzt werden, beispielsweise mittels Plasma- oder Flammspritzen. Auch so lassen sich grossflächige, zusammenhängende Metall-Auskleidungen realisieren, sodass die Glasschmelze oder Glaskeramik nicht unmittelbar mit dem Feuerfestmaterial in Berührung gelangt oder korrosive Dämpfe zu einer Zersetzung des Feuerfestmaterials führen.

Gemäß einer weiteren Ausführungsform kann das Feuerfestmaterial in Form einer Keramik auch auf die Außenoberflächen eines Metallblechgebildes mit einem geeigneten Innenprofil aufgespritzt werden. Bei dieser Ausführungsvariante wird zunächst ein Metallgebilde aus Metallblechen mit einem geeigneten rohr- oder rinnenförmigen Innenquerschnitt gebildet. Anschließend wird die Keramik so lange auf die Außenseiten des Metallgebildes aufgespritzt, bis ein das von dem Metallgebilde gebildetes rohrförmiges Gebilde bzw. Rinne umgebender Keramikkörper ausgebildet ist, der die Metallbleche ausreichend vor einer Oxidation schützt und eine geeignete thermische Masse zur thermischen Isolation der zu läuternden Glasschmelze oder Glaskeramik aufweist. Bevorzugt werden dabei keramische Schichten aus Al₂O₃ oder ZrO₂ eingesetzt. Durch die keramische Außenschicht kann insbesondere der Oxidationangriff des Metallgebildes von Aussen durch Luft reduziert werden, eine Edelmetall-Abdampfung verringert werden und insgesamt die Standzeit der Vorrichtung vorteilhaft erhöht werden.

Bevorzugt ist dem rohrförmigen Gebilde bzw. der Rinne der Läutervorrichtung zumindest eine elektrische Stromversorgungseinrichtung zugeordnet, um das Unterteil und das Oberteil über elektrische Anschlüsse mittels Widerstandsheizen zu beheizen. Selbstverständlich kann die Läutervorrichtung grundsätzlich auch durch induktives Beheizen oder Flammenheizen erwärmt werden.

Das Metall bzw. die Metallauskleidung kann in Längsrichtung auch in mehrere Segmente unterteilt sein, denen jeweilige elektrische Stromversorgungseinrichtungen zugeordnet sind, sodass die Segmente getrennt auch auf unterschiedliche Temperaturen beheizbar sind. So lassen sich die Strömungs- und Mischverhältnisse zur Läuterung noch flexibler vorgeben.

Bevorzugt ist in dem rohrförmigen Gebilde bzw. der Rinne der Läutervorrichtung quer zu einer Strömungsrichtung der Glasschmelze ein Metallblech mit einem Profil angeordnet, das zu dem Profil des rohrförmigen Gebildes bzw. der Rinne korrespondierend ausgebildet ist, sodass eine Kernströmung der Glasschmelze in dem rohrförmigen Gebilde bzw. in der Rinne zumindest behindert und bevorzugt verhindert ist. Bevorzugt ist das Metallblech mittig in dem rohrförmigen Gebilde bzw. in der Rinne angeordnet.

Als Metalle zur Auskleidung des rohrförmigen Gebildes bzw. der Rinne werden zweckmäßig inaktive oder relativ reaktionsträge Metalle verwendet, insbesondere solche Metalle, die zu einer nur geringen Verfärbung der Glasschmelze führen, sodass sich auch optische Gläser mit relativ niedrigem Extinktionskoeffizienten realisieren lassen. Besonders bevorzugt ist das Metall aus einem oder mehreren der folgenden Materialien gebildet: Edelmetall, Pt, PtRh, insbesondere PtRh10, PtAu, insbesondere PtAu5, PtIr, Nickelbasis-Legierung, Kobaltbasis-Legierung.

Als Edelmetall-Legierungen werden erfindungsgemäß bevorzugt sog. ODS-Legierungen (Oxidpartikel-verstärkte Legierungen) verwendet, die nicht durch ein pulvermetallurgisches Verfahren hergestellt sind. Besonders ODS-Legierungen auf der Basis von PtRh10 oder PtAu5, die nicht durch ein pulvermetallurgisches Verfahren hergestellt sind, zeigen ein deutlich verbessertes Verhalten hinsichtlich deren Verarbeitung, z.B. beim Schweißen. Dabei wird die Ausscheidung dieser Legierungen bzw. der Dispersoide bevorzugt durch eine innere Oxidation gebildet.

Die Edelmetall-Legierungen können auch schmelz- oder pulvermetallurgisch hergestellt sein, wobei Legierungen auf der Basis von Platin ganz besonders bevorzugt werden.

Nachfolgend werden bevorzugte Ausführungsbeispiele der vorliegenden Erfindung unter Bezugnahme auf die beigefügten Zeichnungen beschrieben werden, woraus sich weitere Merkmale, Vorteile und zu lösende Aufgaben ergeben werden und worin:
Fig. 1 einen Querschnitt durch eine Läutervorrichtung gemäß dem Stand der Technik darstellt;
Fig. 2 in einem perspektivischen Querschnitt eine Läutervorrichtung gemäß einer ersten Ausführungsform der vorliegenden Erfindung darstellt;
Fig. 3a die Läutervorrichtung gemäß der Fig. 2 in einem Querschnitt darstellt;
Fig. 3b in einem Querschnitt eine Läutervorrichtung gemäß einer zweiten Ausführungsform der vorliegenden Erfindung darstellt;
Fig. 4 in einem Querschnitt eine Läutervorrichtung , die einen besseren Verstandnis der vorliegenden Erfindung dient;
Fig. 5 in einer schematischen Übersicht mögliche rechteckförmige Profile gemäß der vorliegenden Erfindung darstellt;
Fig. 6a die Ausbildung eines im Wesentlichen rechteckförmigen Profils mit abgerundeten Eckbereichen gemäß der vorliegenden Erfindung darstellt; und
Fig. 6b die Ausbildung eines im Wesentlichen ovalen Profils der Läutervorrichtung darstellt.

In den Figuren bezeichnen identische Bezugszeichen identische oder im Wesentlichen gleich wirkende Elemente oder Elementgruppen.

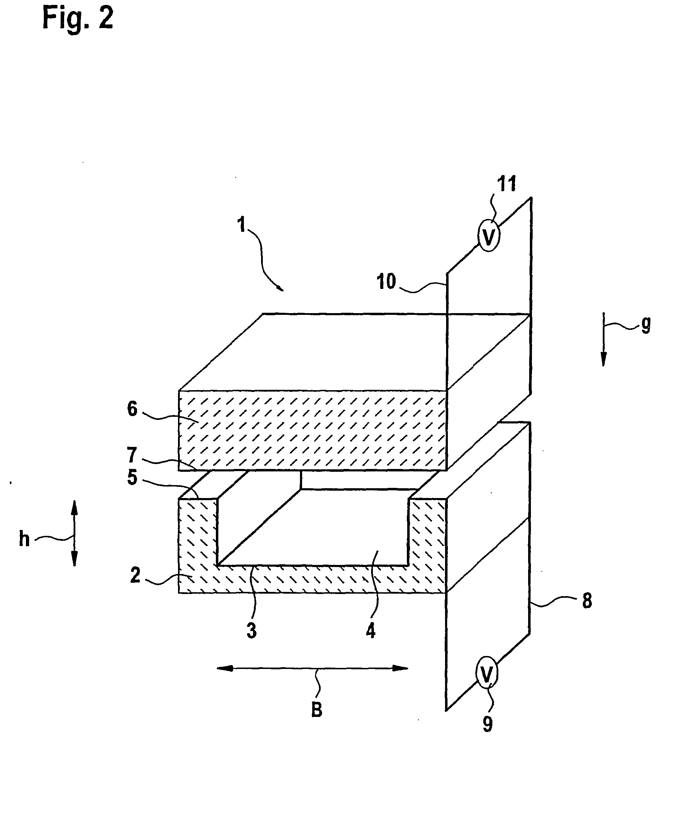

Die Fig. 2 zeigt in einer perspektivischen Querschnittsansicht eine Vorrichtung zum Läutern gemäß einer ersten Ausführungsform der vorliegenden Erfindung. Dargestellt ist nur die Läuterkammer 1 zum Aufnehmen einer Glasschmelze und zum Leiten der Glaskeramik von einem Einlass zu einem Auslass. Die Läuterkammer 1 umfasst ein Unterteil 2, in welchem eine wannen- bzw. trogförmige Rinne 4 ausgebildet ist, und ein im Wesentlichen plattenförmiges Oberteil 6, das die Rinne 4 nach oben hin abschließt. Das Unterteil 2 und das Oberteil 6 sind aus einem Feuerfestmaterial, beispielsweise aus einer feuerfesten Keramik, hergestellt. Die Innenoberflächen 3, 7 des Unterteils 2 und des Oberteils 6 sind aus einem Metall gebildet. Wie in der Fig. 2 gezeigt, ist das Profil der Rinne 4 im Wesentlichen rechteckförmig, mit einer maximalen Breite B und einer maximalen Höhe h. Das Profil der Rinne 4 ist nicht-kreisförmig und ist im Wesentlichen in horizontaler Richtung und senkrecht zur Richtung der Schwerkraft g verbreitert. Erfindungsgemäß ist das Verhältnis h/B kleiner als etwa 0,5, bevorzugt deutlich kleiner als 0,5, gewählt. Im Betrieb wird der Massendurchsatz so gewählt, dass die Rinne 4 nicht ganz bis zur maximalen Innenhöhe h mit der Glasschmelze gefüllt ist. Somit verbleibt über der Oberfläche der Glasschmelze ein Gasvolumen, wie anhand der Fig. 1 vorstehend beschrieben.

Die Innenseiten der Rinne 4 sind zumindest bis zu der bestimmungsgemäßen Glasstandshöhe und bevorzugt bis zum oberen Rand 5 hin aus einem Metall gebildet, dass im Kontakt mit der Glasschmelze möglichst wenig reagiert, sodass die Zusammensetzung der Glasschmelze im Wesentlichen gar nicht durch das Metall beeinflusst wird.

Das Metall 7 auf der Innenseite des Oberteils 6 dient einem Korrosionsschutz des Oberteils 6, sodass aggressive, korrosive Dämpfe, die aus der Glasschmelze oder Glaskeramik austreten, das Oberteil 6 nicht zersetzen.

In der Lage gemäß der Fig. 2, in welcher das Oberteil 6 auf dem oberen Rand 5 des Unterteils 2 aufliegt, ist zwischen dem Oberteil 6 und dem Unterteil 2 ein Abstandstück (nicht gezeigt) aus einem isolierenden Material angeordnet, sodass die metallischen Innenseiten 3, 7 elektrisch zueinander isoliert sind. Das isolierende Abstandstück kann auch gekühlt werden, beispielsweise mittels einer Flüssigkeits- oder Wasserkühlung, sodass Dichtungsstücke mit geeigneten Schmelzpunkten eingesetzt werden können.

Wie in der Fig. 2 gezeigt, ist die Metallschicht 3 des Unterteils 2 über elektrische Anschlüsse 8 mit einer Stromversorgungseinrichtung 9, insbesondere einer Wechselspannungsquelle, verbunden und ist die Metallschicht 7 des Oberteils 6 über elektrische Anschlüsse 10 mit einer zweiten elektrischen Stromversorgungseinrichtung 11, insbesondere einer Wechselspannungsquelle, verbunden. Das Oberteil 6 und das Unterteil 2 können so getrennt mittels Widerstandsheizen beheizt werden. In Längsrichtung der Rinne 4 können in dem Unterteil 2 und/oder in dem Oberteil 6 auch mehrere Segmente vorgesehen sein, die getrennt zueinander elektrisch beheizt werden können.

Die Stromversorgungseinrichtungen 9, 11 können zur Erzielung einer vorgegebenen Temperatur des Unterteils 2 und/oder des Oberteils 6 geregelt werden. Zu diesem Zweck kann die Temperatur des Unterteils 2 und/oder des Oberteils 6 auch gefühlt werden.

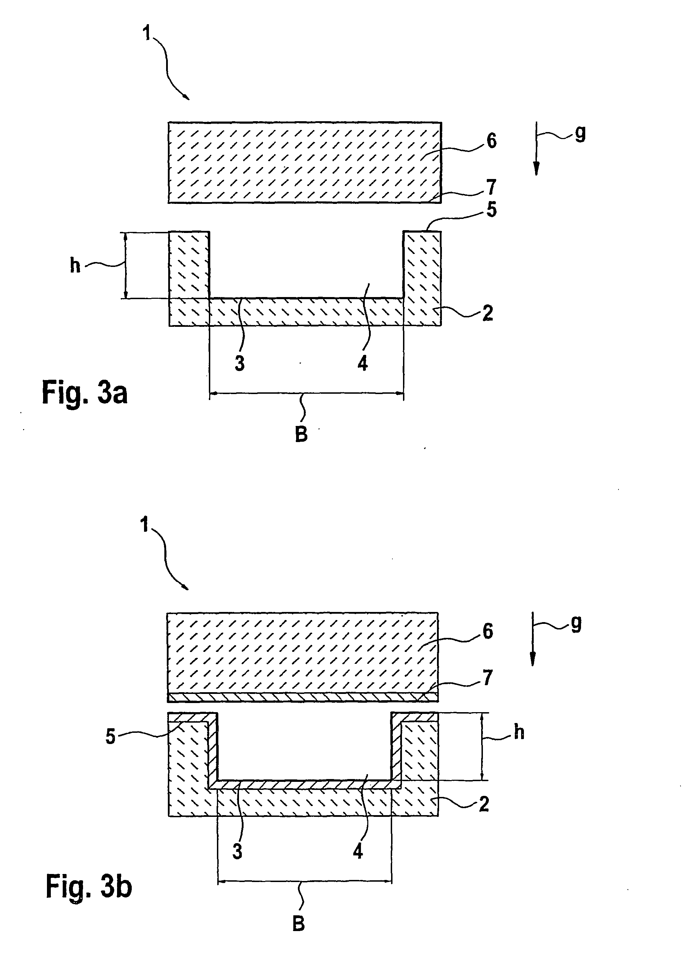

Die Fig. 3a zeigt die Läuterkammer gemäß der Fig. 2 in einer Querschnittsansicht. Gemäß der Fig. 3a ist die Metallschicht 3 und die Metallschicht 7 auf das Unterteil 2 bzw. das Oberteil 6 aufgespritzt, beispielsweise mittels Flamm- oder Plasmaspritzen. Die so gebildeten Metallschichten 3, 7 überziehen die Innenoberflächen des Unterteils 2 und des Oberteils 6 vollständig und mit einer ausreichenden Stärke, sodass ein elektrisches Widerstandsheizen auch mit hoher Heizleistung möglich ist. Zur Herstellung der Rinne 4 in dem Unterteil 2 kann ein plattenförmiger Block aus einem Feuerfestmaterial, insbesondere einer feuerfesten Keramik, geeignet bearbeitet werden oder können mehrere geeignete Standard-Elemente aus dem Feuerfestmaterial, beispielsweise L-förmige Elemente und plattenförmige Elemente, geeignet zu der Rinne mit einer vorgegebenen Geometrie zusammengesetzt werden. Auch das Oberteil 6 kann aus mehreren Stücken zusammengesetzt sein.

Die Fig. 3b zeigt in einem schematischen Querschnitt eine Läuterkammer gemäß einer zweiten Ausführungsform der vorliegenden Erfindung. Gemäß der zweiten Ausführungsform sind die Innenoberflächen des Unterteils 2 und des Oberteils 6 mit einem Blech aus einem geeigneten Metall ausgekleidet. Zur Ausbildung der Rinne 4 wird ein Blech geeignet umgeformt, um ein wannen- bzw. trogförmiges längliches Gebilde zu bilden. Die Blechverkleidung 7 kann hingegen ohne vorherige Umformung aus einem Standard-Metallblech zugeschnitten werden. Selbstverständlich können die Metallverkleidungen 3, 7 auch aus mehreren Stücken zusammengesetzt sein, beispielsweise Stoß-an-Stoß aneinander anliegen und/oder stoffschlüssig miteinander verbunden sein. Die Metallverkleidungen 3, 7 können auf das Unterteil 2 bzw. das Oberteil 6 aufgelegt werden oder können mit diesen verbunden sein, beispielsweise mittels nicht dargestellter Halte- bzw. Verbindungsklammern, Schraubverbindungen oder geeigneten kraftschlüssigen Verbindungstechniken.

Die Vorteile einer Blechverkleidung gemäß der Fig. 3b gegenüber einer mittels eines Spritzverfahrens hergestellten Metallschicht sind insbesondere wie folgt:
(1) selbst im Falle einer Rissbildung in dem Unterteil 2 und/oder in dem Oberteil 6 kann ein sicheres Betriebsverhalten ohne Austritt der Glasschmelze aus der Rinne 4 gewährleistet werden;
(2) Blechverkleidungen lassen sich durch geeignete Blechverarbeitungs- und Blechumformungswerkzeuge in einfacher Weise herstellen;
(3) durch die Materialtrennung von Feuerfestmaterial des Ober- bzw. Unterteils und der Blechverkleidung können die unterschiedlichen Wärmeausdehnungen kompensiert werden, beispielsweise können geeignete Dehnungsfugen bzw. -hohlräume die deutlich größere Wärmeausdehnung der Blechverkleidung ausgleichen;
(4) durch Verwendung von Feuerfestmaterial- bzw. Keramik-Vollkörpern zur Ausbildung des Oberteils 6 und des Oberteils 2 kann für einen wirksamen Oxidationsschutz der Blechverkleidungen gesorgt werden;
(5) die Materialien des Unterteils 2, des Oberteils 6 und der Blechverkleidungen 3, 7 können ohne Rücksicht auf deren Verbindungseigenschaften zueinander gewählt werden.

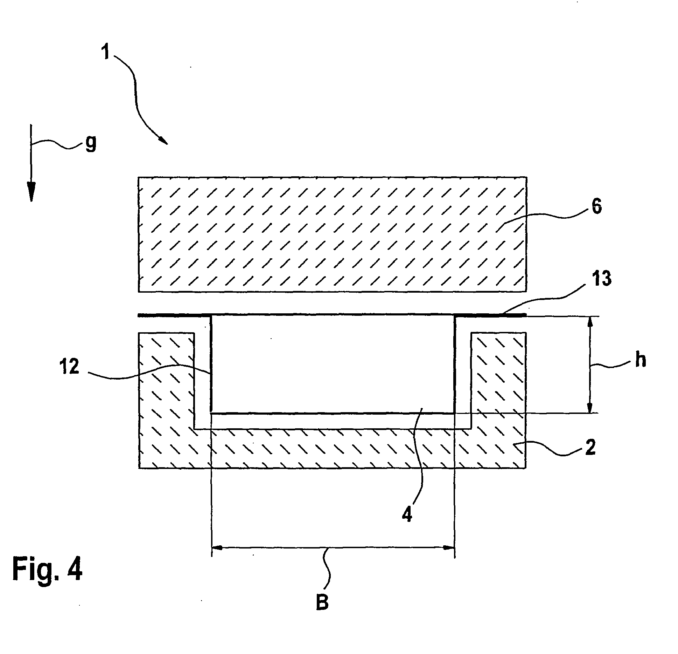

Die Fig. 4 dient der weitergehenden Erläuterung der Prinzipien der vorliegenden Anmeldung und (1) zeigt in einem Querschnitt eine Läuterkammer, die nicht von der vorliegenden Erfindung mit umfasst ist Gemäß der Fig. 4 sind die Metallauskleidung 12 des Unterteils 2 und die Metallauskleidung 13 des Oberteils 6 miteinander elektrisch verbunden. Die Metallauskleidungen 12, 13 können aus Metallblechen gebildet sein oder mittels geeigneter Spritzverfahren auf die Innenoberflächen des Unterteils 2 und des Oberteils 6 aufgespritzt werden. Dabei können das Unterteil 2 und das Oberteil 6 über nicht dargestellte elektrische Anschlüsse und eine gemeinsame Stromversorgungseinrichtung gemeinsam elektrisch beheizt werden, was den Aufwand zum Heizen der Läuterkammer 1 verringert.

Als Metalle zur Auskleidung der Innenoberflächen des Unterteils 2 und des Oberteils 6 werden gemäß der vorliegenden Erfindung folgende Materialien bevorzugt: Edelmetall, Platin (Pt), PtRh, insbesondere PtRh10, PtAu, insbesondere PtAu5, PtIr, Nickelbasis-Legierungen oder Kobaltbasis-Legierungen. Wie der Fachmann ohne weiteres erkennen wird, können auch andere in Kontakt mit einer Glasschmelze oder Glaskeramik reaktionsträge oder inerte Metalle verwendet werden, die eine ausreichende Temperaturbeständigkeit aufweisen.

Ganz besonders bevorzugt werden erfindungsgemäß als Edelmetall-Legierungen ODS-Legierungen (Oxidpartikel-verstärkte Legierungen) verwendet, die nicht durch ein pulvermetallurgisches Verfahren hergestellt sind. Dabei erfolgt die Ausscheidung der Legierung bzw. Dispersoide bevorzugt durch eine innere Oxidation. Besonders ODS-Legierungen auf der Basis von PtRH10 oder PtAu5, die nicht durch ein pulvermetallurgisches Verfahren hergestellt sind, zeigen ein vorteilhaftes Verhalten hinsichtlich Bearbeitbarkeit, insbesondere Schweißbarkeit. Es können auch Edelmetall-Legierungen verwendet werden, die durch ein schmelzmetallurgisches oder pulvermetallurgisches Verfahren hergestellt sind. Dabei werden Edelmetall-Legierungen auf der Basis von Platin (Pt) bevorzuzt.

Ganz besonders vorteilhafte Eigenschaften hinsichtlich Bearbeitbarkeit, Oxidationsverhalten und dergleichen lassen sich erzielen, wenn die Edelmetall-Legierung aus einer Platin-Legierung gebildet ist, die einen Anteil von etwa 80 Gew. % bis etwa 99 Gew. % Platin (Pt) und einen Anteil von etwa 20 Gew. % bis etwa 1 Gew. % Rhodium (Rh) oder einen Anteil von etwa 90 Gew. % bis etwa 99 Gew. % Platin (Pt) und einen Anteil von etwa 10 Gew. % bis etwa 1 Gew. % Gold (Au) oder einen Anteil von etwa 90 Gew. % bis etwa 99 Gew. % Platin (Pt) und einen Anteil von etwa 10 Gew. % bis etwa 1 Gew. % Iridium (Ir) aufweist

Die Läuterkammer gemäß der vorstehenden Beschreibung kann grundsätzlich diskontinuierlich betrieben werden. Bevorzugt wird die Läuterkammer jedoch gemäß den vorstehenden Ausführungsbeispielen kontinuierlich oder quasi kontinuierlich von der Glasschmelze oder Glaskeramik durchströmt. Der erzielbare Massendurchsatz wird dabei durch die Strömungsgeschwindigkeit und den effektiven Strömungsquerschnitt vorgegeben und kann durch Ändern der Parameter B, h und des Profils der Rinne bzw. des rohrförmigen Gebildes variiert werden.

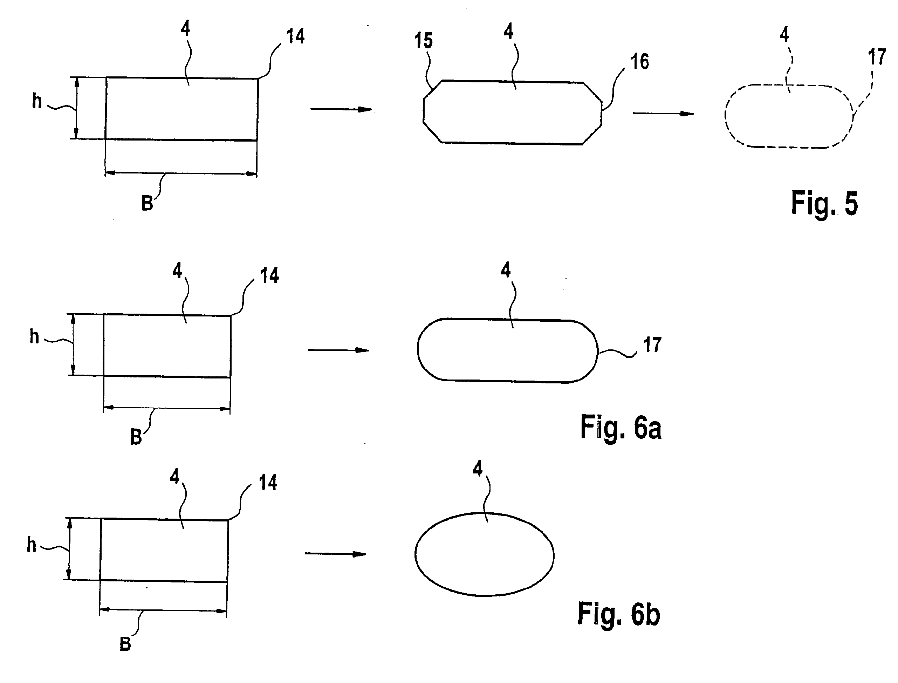

Zur Erzielung einer erfindungsgemäß hohen Läuterungswirkung ist es wichtig, dass das Profil des rohrförmigen Gebildes bzw. der Rinne quer zur Strömungsrichtung und senkrecht zur Richtung der Schwerkraft, das heißt in der bestimmungsgemäßen horizontalen Lage der Läuterkammer in horizontaler Richtung, verbreitert ist zu einem nicht-kreisförmigen Profil. Nachfolgend werden anhand der Figuren 5 bis 6b beispielhaft bevorzugte Profile beschrieben werden. Dabei wird stets von einem rechteckförmigen Profil mit einer maximalen Breite B und einer maximalen Innenhöhe h der Rinne 4 als Grundform ausgegangen. Gemäß den Figuren 5 bis 6b weist ein solches rechteckförmiges Profil 4 Eckbereiche 14 auf, wo benachbarte Innenwände der Rinne 4 im Wesentlichen unter einem rechten Winkel aufeinander zulaufen. Dies kann zu lokalen Verspannungen der Metallverkleidungen in den Eckbereichen 14 und zu einer Störung des Strömungsprofils der in der Rinne 4 aufgenommenen Glasschmelze führen.

Zur Minderung solcher thermischer Verspannungen sind gemäß der Fig. 5 die Eckbereiche 14 abgeschrägt, sodass das Profil der Rinne 4 trapezförmige Seitenbereiche mit abgeschrägten Eckbereichen 15 und einer im Wesentlichen gradlinigen Seitenwand 16 aufweist. Wie durch den rechten Pfeil in der Fig. 5 angedeutet, kann ein solches Profil mit trapezförmigen Seitenwänden auch weiter zu einem Profil mit bogenförmigen oder elliptischen Seitenwandbereichen 17 weiter verarbeitet werden.

Gemäß der Fig. 6a werden die seitlichen Randbereiche des im Wesentlichen rechteckförmigen Profils der Rinne 4 in einem Arbeitsschritt zu den dargestellten bogenförmigen Wandbereichen 17 umgeformt. Die Fig. 6b zeigt eine weitere Variante, bei welcher das im Wesentlichen rechteckförmige Profil der Rinne 4 in einem Arbeitsschritt zu einem ovalen oder elliptischen Profil umgeformt wird.

Zur Erzeugung der vorgenannten Profile können die Metallbleche mittels eines CNC-Biegeverfahrens umgeformt werden. Selbstverständlich kommen beliebige andere Umformungsverfahren aus dem Stand der Technik zur Erzeugung der beschriebenen Profile grundsätzlich in Betracht. Wie dem Fachmann ohne weiteres ersichtlich sein wird, können die vorstehenden Profile selbstverständlich auch in Grundformen aus einem Feuerfestmaterial, insbesondere einer feuerfesten Keramik, gebildet werden, um dann mittels eines geeigneten Spritzverfahrens auf der Innenseite metallisiert bzw. mit Metall überzogen zu werden.

Läuterkammern gemäß der zweiten Ausführungsform oder gemäß der Fig. 4, bei denen die Rinne bzw. das rohrförmige Gebilde durch Umformen von Metallblechen ausgebildet wird, können grundsätzlich auch wie folgt hergestellt werden: zunächst werden Metallbleche, wie anhand der Figuren 3b und 4 beschrieben, geeignet umgeformt, um die Rinne bzw. das rohrförmige Gebilde mit dem erfindungsgemäßen Profil zu bilden; anschließend werden die Außenseiten solcher Metallbleche mit einem feuerfesten Material bespritzt, insbesondere mit einer feuerfesten Keramik; nach geeigneter Härtung des Feuerfestmaterials, beispielsweise in einem Backofen, sind die Außenseiten der Metallbleche dann von einer Schicht aus einem Feuerfestmaterial in der Art des in den Fig. 3b und 4 dargestellten Oberteils und Unterteils umgeben.

Vorteilhafter Weise wird die erfindungsgemäße Vorrichtung zum Läutern von optischen Gläsern, insbesondere von hochschmelzenden optischen Gläsern, verwendet.

## Patentansprüche

1. Vorrichtung zum Läutern einer Glasschmelze, mit einem beheizbaren rohrförmigen Gebilde (4), das im Wesentlichen horizontal angeordnet ist, um die Glasschmelze oder Glaskeramik aufzunehmen, wobei das rohrförmige Gebilde (4) entlang einem Umfang von einem Feuerfestmaterial (2, 6) umgeben ist und das rohrförmige Gebilde (4) ein nicht-kreisförmiges Profil aufweist, das im Wesentlichen in horizontaler Richtung (B) verbreitert ist, bei welcher Vorrichtung das rohrförmige Gebilde von einem Unterteil (2) und einem Oberteil (6) aus dem Feuerfestmaterial gebildet ist, in dem Unterteil (2) eine Rinne (4) zum Aufnehmen der Glasschmelze ausgebildet ist und das Oberteil (6) zum Abdecken der Rinne (4) ausgelegt ist, **dadurch gekennzeichnet, dass** Innenoberflächen (3, 7) des Unterteils (2) und des Oberteils (6) zumindest abschnittsweise aus einem Metall gebildet sind und mit zumindest einer Stromversorgungseinrichtung (9, 11) so verbunden sind, dass das Unterteil (2) und das Oberteil (6) getrennt elektrisch beheizbar sind.

2. Vorrichtung nach Anspruch 1, **dadurch gekennzeichnet, dass** die Innenoberflächen (3, 7) des Unterteils (2) und des Oberteils (6) vollständig aus dem Metall gebildet sind.

3. Vorrichtung nach Anspruch 2, **dadurch gekennzeichnet, dass** zwischen dem Unterteil (2) und dem Oberteil (6) ein Abstandstück aus einem isolierenden Material angeordnet ist, sodass das Oberteil und das Unterteil getrennt elektrisch beheizbar sind.

4. Vorrichtung nach Anspruch 3, **dadurch gekennzeichnet, dass** das Unterteil (2) einen oberen Rand (5) zum Abstützen des Oberteils (6) aufweist.

5. Vorrichtung nach Anspruch 4, **dadurch gekennzeichnet, dass** das Oberteil (6) als plattenförmiger Körper ausgebildet ist.

6. Vorrichtung nach einem der Ansprüche 2 bis 5, **dadurch gekennzeichnet, dass** die Innenoberflächen (3, 7) des Unterteils (2) und des Oberteils (6) mit einem Metallblech ausgekleidet sind.

7. Vorrichtung nach einem der Ansprüche 2 bis 6, **dadurch gekennzeichnet, dass** das Metall auf Innenoberflächen des Unterteils (2) und/oder des Oberteils (6) aufgespritzt ist, insbesondere mittels Plasma- oder Flammenspritzen.

8. Vorrichtung nach Anspruch 5 oder 6, **dadurch gekennzeichnet, dass** das Feuerfestmaterial (2, 6) durch Aufspritzen einer Keramik auf Außenoberflächen des Metallblechs (3, 7) ausgebildet ist, insbesondere durch Aufspritzen von Al₂O₃ oder ZrO₂.

9. Vorrichtung nach einem der vorhergehenden Ansprüche, **dadurch gekennzeichnet, dass** dem rohrförmigen Gebilde (4) zumindest eine elektrische Stromversorgungseinrichtung (9, 11) zugeordnet ist, um das Unterteil (2) und das Oberteil (6) über elektrische Anschlüsse (8, 10) zu beheizen.

10. Vorrichtung nach Anspruch 9, **dadurch gekennzeichnet, dass** das Metall (3, 7) in Längsrichtung in mehrere Segmente unterteilt ist, denen jeweilige elektrische Stromversorgungseinrichtungen zugeordnet sind, sodass die Segmente getrennt beheizbar sind.

11. Vorrichtung nach einem der vorhergehenden Ansprüche, **dadurch gekennzeichnet, dass** das Profil des rohrförmigen Gebildes (4) rechteckförmig ist.

12. Vorrichtung nach Anspruch 11, **dadurch gekennzeichnet, dass** Eckbereiche (14) des rechteckförmigen Profils des rohrförmigen Gebildes (4) abgeschrägt (15) und/oder abgerundet (17) sind.

13. Vorrichtung nach Anspruch 11 oder 12, **dadurch gekennzeichnet, dass** ein Verhältnis (h/B) einer maximalen Höhe (h) des rohrförmigen Gebildes (4) zu einer maximalen Breite (B) des rohrförmigen Gebildes kleiner als 0,5, bevorzugt deutlich kleiner als 0,5, ist.

14. Vorrichtung nach einem der vorhergehenden Ansprüche, **dadurch gekennzeichnet, dass** in dem rohrförmigen Gebilde (4) quer zu einer Strömungsrichtung der Glasschmelze und bevorzugt mittig zumindest ein Metallblech mit einem zum Profil des rohrförmigen Gebildes (4) korrespondierend ausgebildeten Profil angeordnet ist, um eine Kernströmung der Glasschmelze in dem rohrförmigen Gebilde (4) zumindest zu behindern.

15. Vorrichtung nach einem der vorhergehenden Ansprüche, **dadurch gekennzeichnet, dass** das Metall gebildet ist aus einem oder mehreren der folgenden Materialien: Edelmetall, Platin (Pt), PtRh, insbesondere PtRh10, PtAu, insbesondere PtAu5, PtIr, Nickelbasis-Legierung, Kobaltbasis-Legierung.

16. Vorrichtung nach Anspruch 15, bei der das Metall durch eine ODS-Legierung (Oxidpartikel-verstärkte Legierung) ausgebildet ist, die nicht durch ein pulvermetallurgisches Verfahren hergestellt ist, wobei eine Ausscheidung von Dispersoiden durch eine innere Oxidation gebildet ist.

17. Vorrichtung nach Anspruch 15, bei der das Metall aus einer Edelmetall-Legierung gebildet ist, die schmelz- oder pulvermetallurgisch hergestellt ist.

18. Vorrichtung nach einem der Ansprüche 15 bis 17, bei der das Metall aus einer Platin-Legierung gebildet ist, die einen Anteil von 80 Gew. % bis 99 Gew. % Platin (Pt) und einen Anteil von 20 Gew. % bis 1 Gew. % Rhodium (Rh) oder einen Anteil von 90 Gew. % bis 99 Gew. % Platin (Pt) und einen Anteil von 10 Gew. % bis 1 Gew. % Gold (Au) oder einen Anteil von 90 Gew. % bis 99 Gew. % Platin (Pt) und einen Anteil von 10 Gew. % bis 1 Gew. % Iridium (Ir) aufweist.

## Claims

1. An apparatus for refining a glass melt, comprising a heatable tubular structure (4) which is arranged essentially horizontally for receiving the glass melt or glass ceramics, wherein the tubular structure (4) is surrounded along a periphery by a fireproof material (2, 6) and the tubular structure (4) has a non-circular profile which is widened essentially in the horizontal direction (B), in which apparatus said tubular structure (4) is formed by a lower part (2) and an upper part (6) made of said fireproof material, a channel (4) for receiving the glass melt is formed in the lower part (2) and said upper part (6) is configured for covering said channel (4), **characterized in that** inner surfaces (3, 7) of said lower part and said upper part (6) are formed at least in sections of said metal and are connected with at least one power supply (9, 11) such that said lower part (2) and said upper part (6) can be heated electrically and separately.

2. The apparatus according to claim 1, **characterized in that** the inner surfaces (3, 7) of the lower part (2) and of the upper part (6) are formed completely of the metal.

3. The apparatus according to Claim 2, **characterized in that** a spacer piece made of an insulating material is arranged between the lower part (2) and the upper part (6), so that the upper part and the lower part can be electrically heated separately.

4. The apparatus according to Claim 3, **characterized in that** the lower part (2) has an upper edge (5) for supporting the upper part (6).

5. The apparatus according to Claim 4, **characterized in that** the upper part (6) is designed as a plate-shaped body for covering the channel (4).

6. The apparatus according to any of Claims 2 to 5, **characterized in that** the inner surfaces (3, 7) of the lower part (2) and of the upper part (6) are lined with a metal sheet.

7. The apparatus according to any of Claims 2 to 6, **characterized in that** the metal is sprayed onto inner surfaces of the lower part (2) and/or upper part (6), in particular by means of plasma or flame spraying.

8. The apparatus according to Claim 5 or 6, **characterized in that** the fireproof material (2, 6) is formed by spraying a ceramic onto outer surfaces of the metal sheet (3, 7), in particular by spraying Al₂O₃ or ZrO₂.

9. The apparatus according to any of the preceding claims, **characterized in that** the tubular structure (4) is assigned at least one electrical power supply device (9, 11) in order to heat the lower part (2) and the upper part (6) via electrical connections (8, 10).

10. The apparatus according to claim 9, **characterized in that** the metal (3, 7) is divided into a number of segments in the longitudinal direction, respective electrical power supply devices being assigned to each of said segments so that the segments can be heated separately.

11. The apparatus according to any of the preceding Claims, **characterized in that** the profile of the tubular structure (4) is essentially rectangular.

12. The apparatus according to Claim 11, **characterized in that** corner regions (14) of the rectangular profile of the tubular structure (4) are chamfered (15) and/or rounded (17).

13. The apparatus according to Claim 11 or 12, **characterized in that** a ratio (h/B) of a maximum height (h) of the tubular structure (4) to a maximum width (B) of the tubular structure is less than about 0.5, preferably considerably less than 0.5.

14. The apparatus according to any of the preceding claims, **characterized in that** at least one metal sheet having a profile corresponding to the profile of the tubular structure (4) is arranged in the tubular structure (4) transversely to a flow direction of the glass melt and preferably in the centre of said tubular structure, in order at least to impede a core flow of the glass melt in the tubular structure (4).

15. The apparatus according to any of the preceding claims, **characterized in that** the metal is formed of one or more of the following materials: noble metal, platinum (Pt), PtRh, in particular PtRh10, PtAu, in particular PtAu5, Ptlr, nickel-based alloy, cobalt-based alloy.

16. The apparatus according to Claim 15, in which the metal is formed by an ODS alloy (oxide-dispersion-strengthened alloy) which is not prepared by a powder metallurgical method, wherein a dispersion of dispersoids is formed by an internal oxidation.

17. The apparatus according to Claim 15, in which the metal is formed of a noble metal alloy which is prepared by melt or powder metallurgy.

18. The apparatus according to any of Claims 15 to 17, in which the metal is formed of a platinum alloy which has a platinum (Pt) content of about 80% by weight to about 99% by weight and a rhodium (Rh) content of about 20% by weight to about 1% by weight or a platinum (Pt) content of about 90% by weight to about 99% by weight and a gold (Au) content of about 10% by weight to about 1% by weight or a platinum (Pt) content of about 90% by weight to about 99% by weight and an iridium (Ir) content of about 10% by weight to about 1% by weight.

## Revendications

1. Dispositif conçu pour affiner une masse de verre en fusion, comportant une cuve tubulaire chauffable (4) qui est disposée sensiblement à l'horizontale et destinée à recevoir la masse de verre en fusion ou la vitrocéramique, laquelle cuve tubulaire (4) est entourée, le long d'un pourtour, d'un matériau réfractaire (2, 6) et présente un profil non-circulaire et sensiblement élargi dans la direction horizontale (B), dans lequel dispositif la cuve tubulaire est formée par une partie inférieure (2) et une partie supérieure (6) constituées dudit matériau réfractaire, dans laquelle partie inférieure (2) est pratiqué un chenal (4) destiné à recevoir la masse de verre en fusion et laquelle partie supérieure (6) est conçue pour recouvrir le chenal (4), **caractérisé en ce que** les surfaces internes (3, 7) de la partie inférieure (2) et de la partie supérieure (6) sont, au moins dans certains secteurs, faites d'un métal et sont raccordées à au moins un dispositif d'alimentation électrique (9, 11), de telle manière que la partie inférieure (2) et la partie supérieure (6) peuvent être séparément chauffées à l'electricité.

2. Dispositif conforme à la revendication 1, **caractérisé en ce que** les surfaces internes (3, 7) de la partie inférieure (2) et de la partie supé-rieure (6) sont entièrement faites d'un métal.

3. Dispositif conforme à la revendication 2, **caractérisé en ce qu'**il comporte, disposée entre la partie inférieure (2) et la partie supérieure (6), une pièce intercalaire en un matériau isolant, de sorte que la partie infé-rieure et la partie supérieure peuvent être séparément chauffées à l'electri-cité.

4. Dispositif conforme à la revendication 3, **caractérisé en ce que** la partie inférieure (2) comporte un bord supérieur (5) sur lequel s'appuie la partie supérieure (6).

5. Dispositif conforme à la revendication 4, **caractérisé en ce que** la partie supérieure (6) est formée d'un corps en forme de plaque.

6. Dispositif conforme à l'une des revendications 2 à 5, **caractérisé en ce que** les surfaces internes (3, 7) de la partie inférieure (2) et de la par-tie supérieure (6) sont revêtues d'une tôle métallique.

7. Dispositif conforme à l'une des revendications 2 à 6, **caractérisé en ce que** le métal a été projeté sur les surfaces internes de la partie infé-rieure (2) et/ou de la partie supérieure (6), en particulier par projection au plasma ou à la flamme.

8. Dispositif conforme à la revendication 5 ou 6, **caractérisé en ce que** le matériau réfractaire (2, 6) a été formé par projection d'une cérami-que, en particulier d'alumine Al₂O₃ ou de zircone ZrO₂, sur les surfaces ex-ternes d'une tôle métallique (3, 7).

9. Dispositif conforme à l'une des revendications précédentes, **caractérisé en ce que** la cuve tubulaire (4) est connectée à au moins un dispositif d'alimentation électrique (9, 11) conçu pour chauffer la partie inférieure (2) et la partie supérieure (6), par l'intermédiaire de raccords électriques (8, 10).

10. Dispositif conforme à la revendication 9, **caractérisé en ce que** le métal (3, 7) est réparti, dans la direction longitudinale, sur plusieurs segments connectés chacun à un dispositif d'alimentation électrique, de telle sorte que les segments peuvent être chauffés séparément.

11. Dispositif conforme à l'une des revendications précédentes, **caractérisé en ce que** le profil de la cuve tubulaire (4) est rectangulaire.

12. Dispositif conforme à la revendication 11, **caractérisé en ce que** les coins (14) du profil rectangulaire de la cuve tubulaire (4) sont tronqués (15) et/ou arrondis (17).

13. Dispositif conforme à la revendication 11 ou 12, **caractérisé en ce que** le rapport h/B de la plus grande hauteur h de la cuve tubulaire (4) à la plus grande largeur B de la cuve tubulaire est inférieur à 0,5, et de préférence, nettement inférieur à 0,5.

14. Dispositif conforme à l'une des revendications précédentes, **caractérisé en ce qu'**il y a dans la cuve tubulaire (4), en travers de la direction de l'écoulement de la masse de verre en fusion et de préférence en position médiane, au moins une tôle métallique dont le profil est de forme correspondante à celle du profil de la cuve tubulaire (4), qui sert à au moins contrarier un écoulement de coeur de la masse de verre en fusion dans la cuve tubulaire (4).

15. Dispositif conforme à l'une des revendications précédentes, **caractérisé en ce que** le métal est constitué de l'un ou de plusieurs des matériaux suivants : métaux nobles, platine (Pt), composés platine-rhodium PtRh, en particulier PtRh₁₀, composés platine-or PtAu, en particulier PtAu₅, composés platine-iridium PtIr, alliages à base de nickel, et alliages à base de cobalt.

16. Dispositif conforme à la revendication 15, dans lequel le métal est formé d'un alliage ODS (alliage renforcé par particules d'oxyde) qui n'a pas été préparé selon un procédé de métallurgie des poudres, la précipitation de dispersoïdes étant le résultat d'une oxydation interne.

17. Dispositif conforme à la revendication 15, dans lequel le métal est formé d'un alliage de métaux nobles qui a été préparé par fusion ou selon un procédé de métallurgie des poudres.

18. Dispositif conforme à l'une des revendications 15 à 17, dans lequel le métal est formé d'un alliage à base de platine qui contient soit 80 à 99 % en poids de platine Pt et 20 à 1 % en poids de rhodium Rh, soit 90 à 99 % en poids de platine Pt et 10 à 1 % en poids d'or Au, soit 90 à 99 % en poids de platine Pt et 10 à 1 % en poids d'iridium Ir.
